# EUROPEAN PATENT APPLICATION

(11) **EP 4 773 794 A1**
(43) Date of publication of application: **08.07.2026**
(21) Application number: 25218249.8
(22) Date of filing: 25.11.2025
(51) Int. Cl.: H10W 20/41, H10W 20/43, G06F 30/398, G06F 30/394

(54) **INTEGRATED CIRCUIT INCLUDING SEGMENTED PATTERNS AND METHOD FOR DESIGNING THE SAME**

(30) Priority: 07.01.2025 KR 20250002034
(71) Applicant: Samsung Electronics Co., Ltd., Suwon-si, Gyeonggi-do 16677 (KR)
(72) Inventor: AHN, Duhyoung, 16677 Suwon-si, Gyeonggi-do (KR); KANG, Minseok, 16677 Suwon-si, Gyeonggi-do (KR); YI, Dongyoun, 16677 Suwon-si, Gyeonggi-do (KR)
(74) Representative: Kuhnen & Wacker Patent- und Rechtsanwaltsbüro PartG mbB

(57) **Abstract**

An integrated circuit is provided. The integrated circuit includes: a first pattern (M32_2) extending along a first direction (X) in a first wiring layer (M3); a second pattern (M22) and a third pattern (M23) extending in parallel with each other along a second direction (Y) in a second wiring layer (M2); a first via (V21) between the first pattern (M32_2) and the second pattern (M22) ; a second via (V23) between the first pattern (M32_2) and the third pattern (M23); and a fourth pattern (M32_1) and a fifth pattern ('M32_3) aligned to the first pattern and extending along the first direction (X) in the first wiring layer (M3). The first pattern (M32_2) is between the fourth pattern (M32_1) and the fifth pattern (M32_3), and the first pattern (M32_2), the fourth pattern (M32_1) and the fifth pattern (M32_3) are electrically connected to each other.

## Description

### BACKGROUND

### 1. Field

The present disclosure relates to an integrated circuit. More specifically, the present disclosure relates to an integrated circuit including segmented patterns and a method for designing the same.

### 2. Description of Related Art

Due to demand for high integration density and development of a semiconductor process, widths, intervals, and/or heights of wirings included in an integrated circuit may be decreased. Accordingly, an influence by a parasitic element of a wiring and an influence by electromigration due to high current density may be increased in the integrated circuit, which may be critical to performance and reliability of integrated circuit.

### SUMMARY

One or more example embodiments provide an integrated circuit, in which influences by a parasitic element of a wiring and electromigration are reduced, and a method for designing the same.

According to an aspect of an example embodiment, there is provided an integrated circuit including: a first pattern extending along a first direction in a first wiring layer; a second pattern and a third pattern extending in parallel with each other along a second direction in a second wiring layer; a first via between the first pattern and the second pattern; a second via between the first pattern and the third pattern; and a fourth pattern and a fifth pattern aligned to the first pattern and extending along the first direction in the first wiring layer. The first pattern is between the fourth pattern and the fifth pattern. The first pattern, the fourth pattern and the fifth pattern are electrically connected to each other.

According to another aspect of an example embodiment, there is also provided a method for designing an integrated circuit, the method including: disposing a first pattern extending along a first direction in a first wiring layer; estimating a current flowing through the first pattern; determining whether electromigration exceeds a critical value based on the first pattern and the current; and segmenting the first pattern based on determining the electromigration exceeds the critical value. The segmenting of the first pattern includes: identifying a first maximum length at which an electromigration short length effect occurs in the first wiring layer; and generating, from the first pattern, a first segment having a length less than or equal to the first maximum length.

According to still another aspect of an example embodiment, there is also provided a method for designing an integrated circuit, the method including: obtaining reference data corresponding to a first wiring layer of the integrated circuit; collecting a maximum value of a current flowing in a pattern of the first wiring layer based on the reference data; and disposing, based on the reference data and the maximum value, a plurality of first patterns individually having lengths less than or equal to a first maximum length at which an electromigration short length effect occurs.

### BRIEF DESCRIPTION OF DRAWINGS

These and/or other aspects, features, and advantages will be more apparent from the following description of example embodiments, taken in conjunction with the accompanying drawings, in which:
FIG. 1 is a diagram illustrating a layout of an integrated circuit according to an example embodiment;
FIGS. 2A, 2B, 2C and 2D are diagrams illustrating examples of a device according to example embodiments;
FIGS. 3A and 3B are diagrams illustrating examples of a layout of an integrated circuit according to example embodiments;
FIG. 4 is a graph illustrating a relationship between a length of a pattern and a current in electromigration according to example embodiments;
FIG. 5 is a flowchart illustrating a method for designing an integrated circuit according to an example embodiment;
FIG. 6 is a flowchart illustrating a method for designing an integrated circuit according to an example embodiment;
FIG. 7 is a diagram illustrating examples of a layout of an integrated circuit according to an example embodiment;
FIG. 8 is a flowchart illustrating a method for designing an integrated circuit according to an example embodiment;
FIG. 9 is a flowchart illustrating a method for designing an integrated circuit according to an example embodiment;
FIG. 10 is a flowchart illustrating a method for designing an integrated circuit according to an example embodiment;
FIG. 11 is a diagram illustrating a layout of an integrated circuit according to an example embodiment;
FIG. 12 is a flowchart illustrating a method for designing an integrated circuit according to an example embodiment;
FIG. 13 is a flowchart illustrating a method for designing an integrated circuit according to an example embodiment;
FIGS. 14A and 14B are diagrams illustrating examples of a layout of an integrated circuit according to example embodiments;
FIGS. 15A and 15B are diagrams illustrating examples of a layout of an integrated circuit according to example embodiments;
FIG. 16 is a flowchart illustrating a method for manufacturing an integrated circuit according to an example embodiment;
FIG. 17 is a block diagram illustrating a system-on-chip (SoC) according to an example embodiment; and
FIG. 18 is a block diagram illustrating a computing system including a memory that stores a program according to an example embodiment.

### DETAILED DESCRIPTION

Hereinafter, example embodiments are described in detail with reference to the accompanying drawings. Like components are denoted by like reference numerals throughout the specification, and repeated descriptions thereof are omitted. It will be understood that when an element or layer is referred to as being "on," "connected to" or "coupled to" another element or layer, it can be directly on, connected or coupled to the other element or layer, or intervening elements or layers may be present. By contrast, when an element is referred to as being "directly on," "directly connected to" or "directly coupled to" another element or layer, there are no intervening elements or layers present. Each example embodiment provided in the following description is not excluded from being associated with one or more features of another example or another example embodiment also provided herein or not provided herein but consistent with the present disclosure.

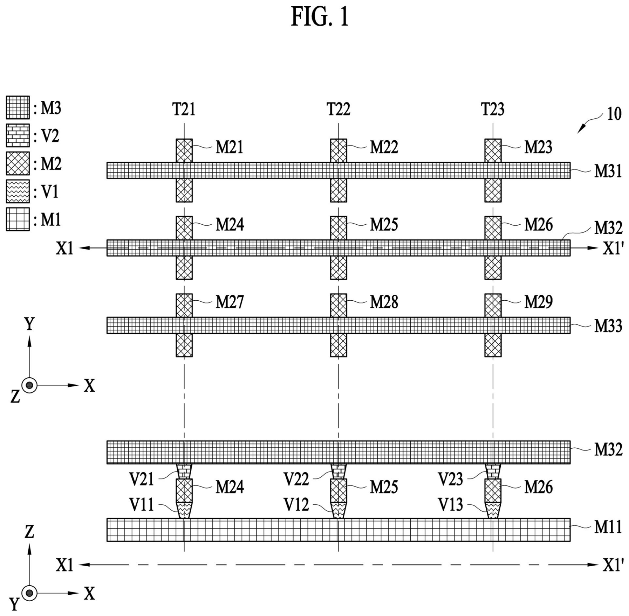

FIG. 1 is a diagram illustrating a layout of an integrated circuit according to an example embodiment. For example, FIG. 1 illustrates a plan view of a layout 10 and a cross-sectional view of the layout 10 taken along line X1-X1'.

Herein, an X-axis direction and a Y-axis direction may be referred to as a first direction and a second direction, respectively. A Z-axis direction may be referred to as a vertical direction or a third direction. A plane formed with the X-axis direction and the Y-axis direction may be referred to as a horizontal plane. An element disposed in a positive Z-direction relative to another element may be referred to as being above the other element. An element disposed in a negative Z-direction relative to another element may be referred to as being below the other element. In addition, an area of an element may refer to a size of the element on a plane parallel to the horizontal plane, and a width of the element may refer to a length in a direction perpendicular to a direction in which the element extends. A surface exposed in the positive Z direction may be referred to as a top surface. A surface exposed in the negative Z direction may be referred to as a bottom surface. A surface exposed in a positive or negative X-direction or Y-direction may be referred to as a side surface. In the drawings, only some layers may be illustrated for convenience for illustration, and although being positioned below the upper pattern, a via connecting the upper pattern and a lower pattern may be shown for understanding. Also, a pattern formed of a conductive material, such as a pattern of a wiring layer, may be referred to as a conductive pattern or may be referred to simply as a pattern.

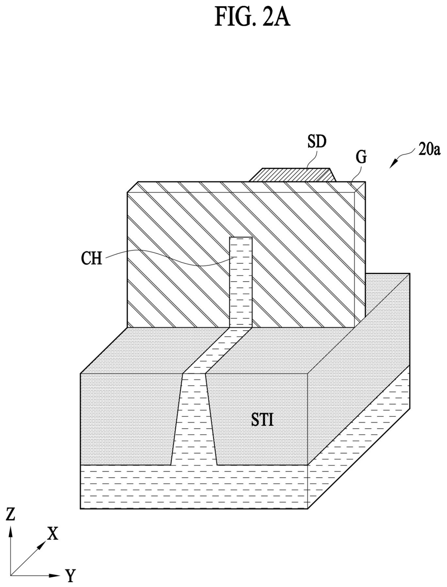

The integrated circuit may include devices disposed on a substrate. Examples of a device disposed on the substrate will be described below with reference to FIGS. 2A through 2D. For example, the devices may include transistors. The integrated circuit may include patterns extending in wiring layers above the devices, namely, front-side wiring layers, and the patterns may be electrically connected to the devices. In some example embodiments, the integrated circuit may include patterns extending in wiring layers below the devices, namely, backside wiring layers, and the patterns may be electrically connected to the devices through a via (or contact) penetrating the substrate. The pattern of the wiring layer may include a conductive material, for example, metal. The patterns of the front-side wiring layers will be mainly described below, but it will be understood that example embodiments may be applied to the patterns of the backside wiring layers.

Referring to FIG. 1, the layout 10 of the integrated circuit may include patterns disposed in a first metal layer M1, a second metal layer M2, and a third metal layer M3. A metal layer may refer to a wiring including metal, namely, a wiring layer including a pattern. Herein, the metal layer will be described as an example of the wiring layer, but it is noted that the wiring layer may include a wiring formed of a conductive material. First to ninth patterns M21 to M29 of the second metal layer M2 may extend along first to third tracks T21 to T23 extending in parallel with each other in the Y-axis direction. First to third patterns M31 to M33 of the third metal layer M3 may extend in parallel with each other in the X-axis direction. Patterns of the first metal layer M1 may extend at positions below the first to third patterns M31 to M33 of the third metal layer M3. For example, as illustrated in the cross-sectional view, a first pattern M11 of the first metal layer M1 may extend in the X-axis direction at a position below a second pattern M32 of the third metal layer M3.

The layout 10 of the integrated circuit may include vias disposed in a first via layer V1 between the first metal layer M1 and the second metal layer M2, and vias disposed in a second via layer V2 between the second metal layer M2 and the third metal layer M3. A pattern of the first metal layer M1 may be connected to patterns of the second metal layer M2 through the vias of the first via layer V1. For example, the first pattern M11 of the first metal layer M1 may be connected to each of fourth to sixth patterns M24 to M26 of the second metal layer M2 through first to third vias V11 to V13 of the first via layer V1. A pattern of the second metal layer M2 may be connected to a pattern of the third metal layer M3 through the vias of the second via layer V2. For example, each of the fourth to sixth patterns M24 to M26 of the second metal layer M2 may be connected to the second pattern M32 of the third metal layer M3 through first to third vias V21 to V23 of the second via layer V2. Accordingly, first to third patterns M21 to M23 of the second metal layer M2 may be electrically connected to a first pattern M31 of the third metal layer M3, the fourth to sixth patterns M24 to M26 of the second metal layer M2 may be electrically connected to the second pattern M32 of the third metal layer M3, and seventh to ninth patterns M27 to M29 of the second metal layer M2 may be electrically connected to a third pattern M33 of the third metal layer M3.

The patterns of the wiring layers may include patterns transmitting supply voltage for supplying power to the devices as well as patterns transmitting a signal generated by the devices. For example, the integrated circuit may include cells and a power delivery network including patterns for supplying the power to the cells. A cell may be a unit of the layout included in the integrated circuit, and may be referred to as a standard cell. The cell may include a transistor. The cell may be designed to perform a predefined function. The cells may be aligned and disposed in a series of rows in the integrated circuit. For example, the cells may be aligned and disposed in a series of rows extending in the first direction. A cell which is disposed in a single row may be referred to as a single-height cell. A cell which is disposed in two or more successive rows may be referred to as a multi-height cell.

In order to supply the power to the cells, patterns extending along a boundary of the rows, namely, a power rail may be disposed. A pattern extending along one of two boundaries of a row may supply a positive supply voltage, and a pattern extending along the other of the two boundaries may supply a negative supply voltage. For example, the first pattern M31, the second pattern M32, and the third pattern M33 may extend along boundaries of the rows extending in the X-axis direction. When the positive supply voltage is applied to the first pattern M31 and the third pattern M33, the negative supply voltage may be applied to the second pattern M32. When the negative supply voltage is applied to the first pattern M31 and the third pattern M33, the positive supply voltage may be applied to the second pattern M32. Accordingly, the cell may receive the positive supply voltage and the negative voltage from the patterns extending along the boundary of the rows.

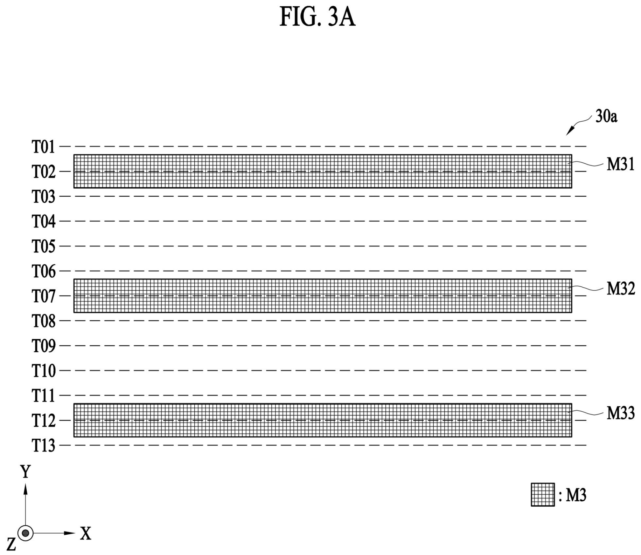

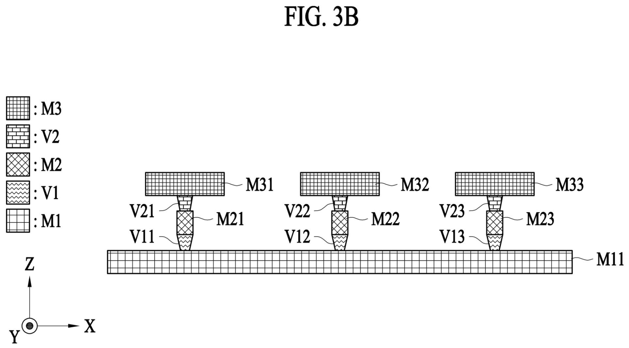

As integration density of the integrated circuit is increased, widths of the patterns, a space between the patterns, and/or thicknesses (e.g., lengths in the Z-axis direction) of the patterns may be decreased. Accordingly, a parasitic component of the pattern, for example, parasitic resistance may be increased, and electromigration due to a high current density may occur. The parasitic resistance may cause a voltage drop, namely, an IR drop (i.e., a current (I) flowing through a resistance (R)), and particularly, the IR drop may cause a drop in the supply voltage which is received by the cell in the power delivery network. Also, the electromigration may cause temporary or permanent flow obstruction of a current, and particularly, the electromigration which occurs in the power transfer network may disturb normal operation of the cell. As described below with reference to FIGS. 3A and 3B, techniques for inhibiting the electromigration and the IR drop may have a trade-off relationship.

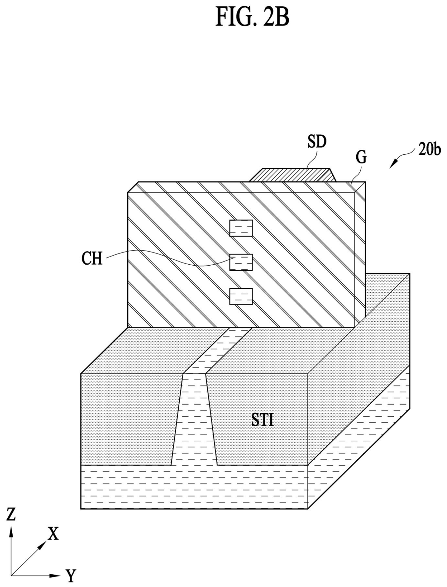

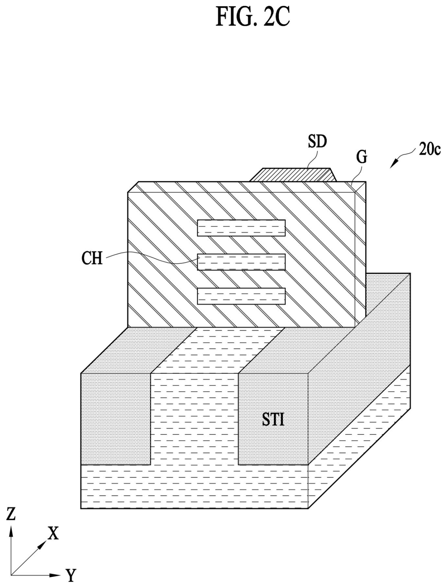

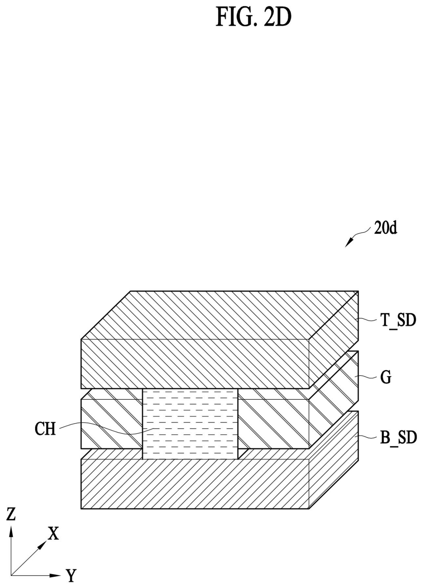

FIGS. 2A through 2D are diagrams illustrating examples of a device according to example embodiments. For example, FIG. 2A illustrates a fin field-effect transistor (FinFET) 20a, FIG. 2B illustrates a gate-all-around field effect transistor (GAAFET) 20b, FIG. 2C illustrates a multi-bridge channel field effect transistor (MBCFET) 20c, and FIG. 2D illustrates a vertical field effect transistor (VFET) 20d. For convenience for illustration, FIGS. 2A through 2C illustrate a state in which one of two source/drain regions is removed, and FIG. 2D illustrates a cross section of the VFET 20d taken along a plane that is parallel to a plane formed with a Y-axis and a Z-axis and passing through a channel CH of the VFET 20d.

Referring to FIG. 2A, the FinFET 20a may be formed by a gate G extending in a Y-axis direction and a fin-shaped active pattern extending in the X-axis direction between shallow trench isolation (STI) structures. A source/drain SD may be formed on both sides of the gate G. Accordingly, a source and a drain may be spaced apart from each other in an X-axis direction. An insulation film may be formed between the channel CH and the gate G. In some example embodiments, the FinFET 20a may be formed by the gate G and a plurality of active patterns spaced apart from each other in the Y-axis direction.

Referring to FIG. 2B, the GAAFET 20b may be formed by active patterns spaced apart from each other in a Z-axis direction and extending in the X-axis direction, namely nanowires, and the gate G which extends in the Y-axis direction. The source/drain SD may be formed on both the sides of the gate G. Accordingly, the source and the drain may be spaced apart from each other in the X-axis direction. The insulation film may be formed between the channel CH and the gate G. It is noted that although FIG. 2B illustrates three nanowires included in the GAAFET 20b, example embodiments are not limited thereto.

Referring to FIG. 2C, the MBCFET 20c may be formed by active patterns spaced apart from each other in the Z-axis direction and extending in the X-axis direction, namely nanosheets, and the gate G which extends in the Y-axis direction. The source/drain SD may be formed to both the sides of the gate G. Accordingly, the source and the drain may be spaced apart from each other in the X-axis direction. The insulation film may be formed between the channel CH and the gate G. It is noted that although FIG. 2C illustrates three nanosheets included in the MBCFET 20c, example embodiments are not limited thereto.

Referring to FIG. 2D, the VFET 20d may include a top source/drain T_SD and a bottom source/drain B_SD spaced apart from each other in the Z-axis direction with the channel CH in between. The VFET 20d may include the gate G which surrounds the channel CH between the top source/drain T_SD and the bottom source/drain B_SD. The insulation film may be formed between the channel CH and the gate G.

It is noted that devices included in an integrated circuit are not limited to the examples of FIGS. 2A through 2D. For example, the integrated circuit may include a ForkFET having a structure in which an N-type transistor and a P-type transistor are close to each other as nanosheets for the P-type transistor and nanosheets for the N-type transistor are separated by a dielectric wall. In addition, the integrated circuit may include a bipolar junction transistor as well as a fin field-effect transistor (FinFET) such as a CFET(complementary field effect transistor), a negative capacitance field effect transistor (NCFET), or a carbon nanotube (CNT) FET.

FIGS. 3A and 3B are diagrams illustrating examples of a layout of an integrated circuit according to example embodiments. For example, FIGS. 3A and 3B illustrate layouts 30a and 30b for inhibiting electromigration.

Referring to FIG. 3A, a layout 30a may include a pattern having an extended width. The width of the pattern may extend, and current density causing the electromigration may be decreased due to an increased cross-sectional area of the pattern. For example, as illustrated in FIG. 3A, the first to third patterns M31 to M33 may extend in parallel with each other in an X-axis direction and have extended widths (namely, a width in a Y-axis direction). A wiring layer may have tracks defined for easy routing, and a pattern of the third metal layer M3 may be aligned in a track extending in the X-axis direction. For example, as illustrated in FIG. 3A, the third metal layer M3 may have first to thirteen tracks T01 to T13 extending in parallel with each other in the X-axis direction. The first to third patterns M31 to M33 may extend in the X-axis direction on a second track T02, a seventh track T07, and a twelfth track T12, respectively.

When the pattern has the extended width in order to inhibit the electromigration, a routing resource may be decreased. For example, as illustrated in FIG. 3A, to maintain a minimum space from the second pattern M32 when the second pattern M32 has an extended width, patterns extending on a sixth track T06 and an eighth track T08 that are adjacent to the seventh track T07 may not be allowed. Thus, the routing resource may be decreased in the third metal layer M3, and routability of the layout 30a may deteriorate.

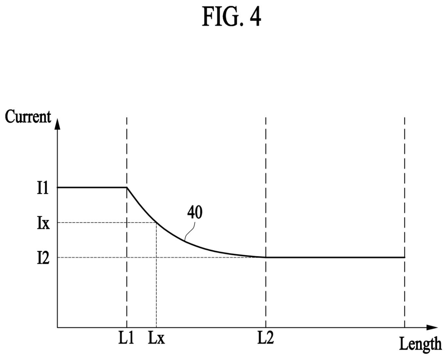

Referring to FIG. 3B, a layout 30b may include a pattern having a shortened length (namely, a length in the X-direction). As described below with reference to FIG. 4, a maximum current density causing the electromigration may be decreased to be less than a critical value when a length of the pattern is decreased within a predetermined range. For example, when the current density is less than the critical value, the pattern may not be damaged due to the electromigration. Accordingly, damage due to the electromigration may be prevented by shortening the length of the pattern. For example, unlike the second pattern M32 of the third metal layer M3, which extends in the X-axis direction in FIG. 1, as illustrated in FIG. 3B, the first to third patterns M31 to M32 of the third metal layer M3 may have shortened lengths, and damage due to the electromigration may be prevented.

When the pattern has the shortened length in order to inhibit the electromigration, an IR drop may be increased. For example, as illustrated in FIG. 3B, when the first to third patterns M31 to M33 are separated from each other, three current paths provided by the first to third vias V11 to V13 of the first via layer V1 and the first to third vias V21 to V23 of the second via layer V2 may be formed between the first pattern M11 of the first metal layer M1 and the third metal layer M3. Unlike current paths merged in the third metal layer M3 by the second pattern M32 in FIG. 1, in FIG. 3B, the three current paths may be independent from each other, and the IR drop may be increased due to a decreased degree of freedom of a current.

As described below with reference to the drawings, damage due to the electromigration may be prevented without sacrificing the routing resource or the IR drop in the integrated circuit. Accordingly, a lifetime and reliability of the integrated circuit may be improved due to prevention of damage due to the electromigration. Also, performance and the reliability of the integrated circuit may be improved due to a decrease in the IR drop, and efficiency of the integrated circuit may be increased by maintaining the routing resource.

FIG. 4 is a graph illustrating a relationship between a length of a pattern and a current in electromigration according to example embodiments. As illustrated in FIG. 4, a horizontal axis of the graph represents the length of the pattern, and a vertical axis of the graph represents the current (or a current density). In the graph, a curve 40 represents a maximum allowable current at which the electromigration is prevented (i.e., inhibited to below a critical level) at a corresponding length of the pattern. Hereinafter, the maximum allowable current at which the electromigration is prevented in the pattern may be simply referred to as a maximum allowable current.

Referring to FIG. 4, the maximum allowable current may be constantly maintained as a first current I1 in a pattern having a length less than or equal to a first length L1. The maximum allowable current may be decreased as the length of the pattern is increased from the first length L1 to a second length L2. The maximum allowable current being increased as the length of the pattern is decreased may be referred to as an electromigration short length effect or simply a short length effect. The maximum allowable current may be constantly maintained as a second current I2 in a pattern having a length greater than or equal to the second length L2. The second I2 is lower than the first current I2.

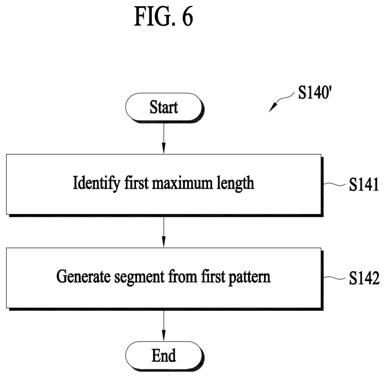

The curve 40 of FIG. 4 may vary depending on a property of the pattern. For example, the curve 40 may be changed depending on a height (or thickness) of the pattern, a material forming the pattern, or the like. The property of the pattern in an integrated circuit may depend on a property of a wiring layer including the pattern. Accordingly, the curve 40 may be changed depending on the wiring layer. For example, the curve 40 may have an offset and/or a shape changing according to the wiring layer. Accordingly, at least one of the first current 11, the second current I2, the first length L1, and the second length L2 may be changed depending on the wiring layer. As described below with reference to FIG. 6, reference data may define curves corresponding to wiring layers.

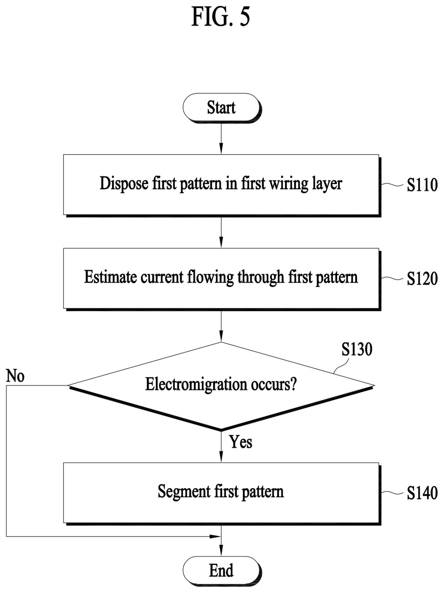

Because the maximum allowable current is increased as the length of the pattern is decreased between the first length L1 and the second length L2, the electromigration may be prevented by decreasing the length of the pattern. However, an IR drop may increase as the length of the pattern is decreased, as described above with reference to FIG. 3B. As described below with reference to FIG. 5, the pattern may have a length for minimizing the IR drop while preventing the electromigration in the integrated circuit.

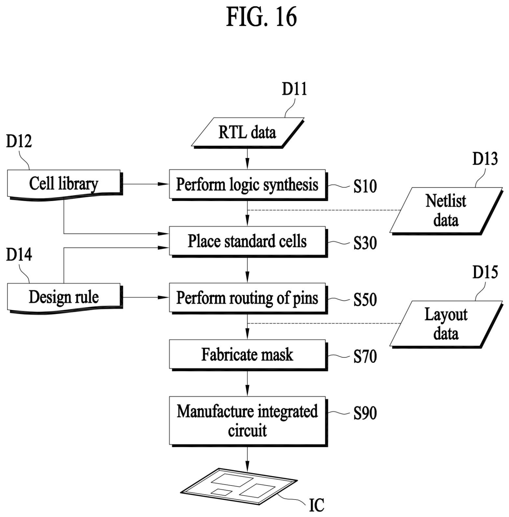

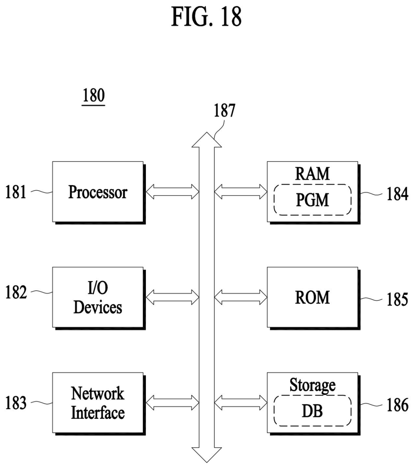

FIG. 5 is a flowchart illustrating a method for designing an integrated circuit according to an example embodiment. In some example embodiments, as described below with reference to FIG. 16, the method of FIG. 5 may be included in an operation of generating layout data that defines a layout of the integrated circuit. As illustrated in FIG. 5, the method for designing the integrated circuit may include a plurality of operations S110 to S140. In some example embodiments, the method of FIG. 5 may be performed by a semiconductor designing tool executed on a computing system (e.g., a computing system 180 of FIG. 18). Hereinafter, FIG. 5 will be described with reference to FIG. 4.

Referring to FIG. 5, a first pattern may be disposed in a first wiring layer in operation S110. For example, the semiconductor designing tool may dispose a pattern extending in a first direction in the first wiring layer in order to transmit a signal and/or power. As described above with reference to FIG. 1, the first wiring layer may be a front-side wiring layer or a backside wiring layer.

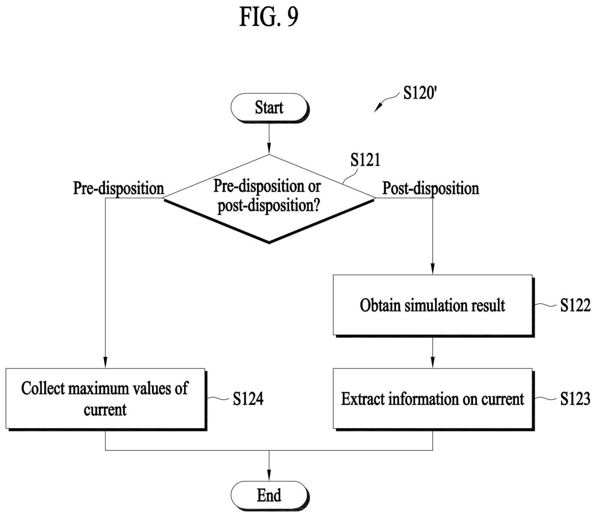

In operation S120, a current flowing through the first pattern may be estimated. In some example embodiments, the semiconductor designing tool may obtain data generated by simulating the data that defines the layout of the integrated circuit and may extract the current flowing through the first pattern from the obtained data. In some example embodiments, the semiconductor designing tool may collect maximum values of a current flowing in a pattern of the first wiring layer and may estimate the current from the collected maximum values. An example of operation S120 will be described below with reference to FIG. 9.

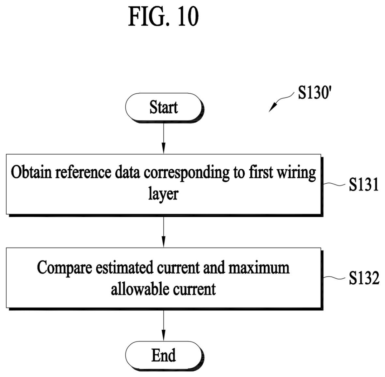

In operation S130, whether electromigration occurs may be determined. For example, the semiconductor designing tool may determine whether the electromigration occurs (i.e., whether the electromigration exceeds a critical level) in the first pattern based on a length of the first pattern disposed in operation S110 and the current estimated in operation S120. In some example embodiments, when the current estimated in operation S120 may be compared with a maximum allowable current corresponding to the length of the first pattern, and when the estimated current is greater than or equal to the maximum allowable current corresponding to the length of the first pattern, the semiconductor designing tool may determine that the electromigration occurs. When the current estimated in operation S120 is less than the maximum allowable current, the semiconductor designing tool may determine that the electromigration does not occur. An example of operation S130 will be described below with reference to FIG. 10. As illustrated in FIG. 5, when the electromigration is determined as occurring, operation S140 may be subsequently performed.

In operation S140, the first pattern may be segmented. As described above with reference to FIG. 4, the maximum allowable current may be increased as the length of the pattern is decreased within a range within which a short length effect occurs. When the current estimated in operation S120 is greater than or equal to the maximum allowable current, the first pattern may be segmented into two or more segments, and the electromigration may be prevented in each segment having a shortened length. The segments segmented from the first pattern may correspond to a single node (e.g., nets or electric potential). An example of operation S140 will be described below with reference to FIG. 6.

FIG. 6 is a flowchart illustrating a method for designing an integrated circuit according to an example embodiment. For example, the flowchart of FIG. 6 represents an example of operation S140 of FIG. 5. As described above with reference to FIG. 5, when electromigration is determined as occurring, a first pattern may be segmented in operation S140' of FIG. 6. As illustrated in FIG. 6, operation S140' may include operation S141 and operation S142. Hereinafter, FIG. 6 will be described with reference to FIGS. 4 and 5.

Referring to FIG. 6, a first maximum length may be identified in operation S141. The first maximum length may refer to a maximum length at which an electromigration short length effect occurs in a first wiring layer in which the first pattern is disposed. For example, when a current estimated in operation S120 of FIG. 5 corresponds to a current Ix of FIG. 4, the first maximum length may be identified as a length Lx. The semiconductor designing tool may access reference data that defines curves corresponding to wiring layers and extract information on the curve 40 which corresponds to the first wiring layer from the reference data. The semiconductor designing tool may identify the length Lx corresponding to the current Ix based on the extracted information.

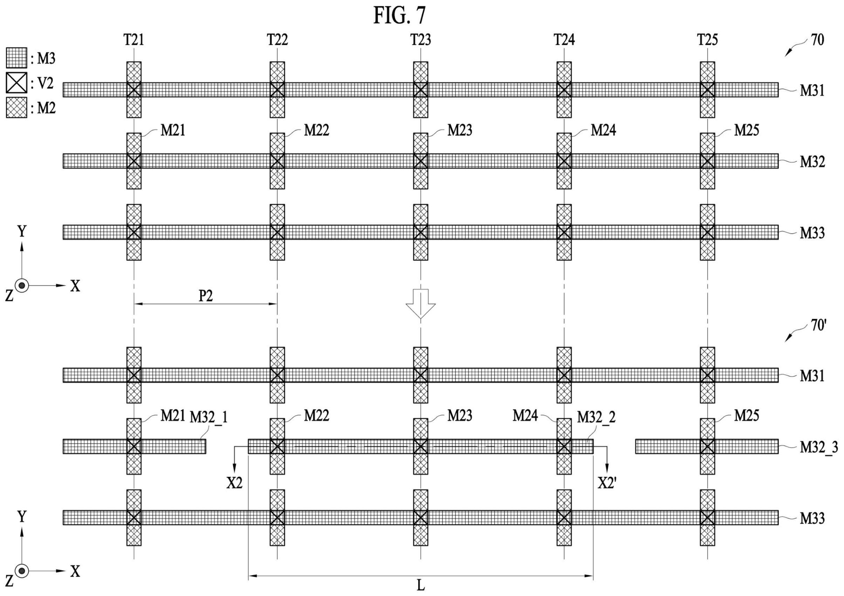

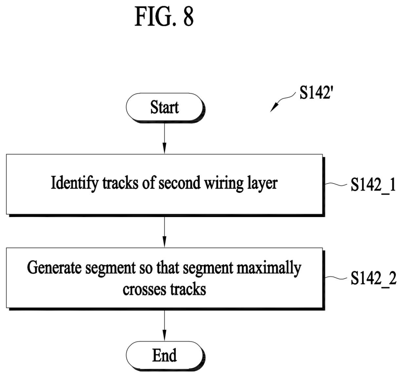

In operation S142, a segment may be generated from the first pattern. For example, the semiconductor designing tool may generate the segment by segmenting the first pattern so that the first pattern has a length less than or equal to the first maximum length identified in operation S141 (e.g., the first maximum length). Accordingly, despite the current estimated in operation S120 of FIG. 5, damage due to the electromigration may be prevented in the segment. An example of the segment will be described below with reference to FIG. 7, and an example of operation S142 will be described below with reference to FIG. 8.

FIG. 7 is a diagram illustrating examples of a layout of an integrated circuit according to an example embodiment. For example, FIG. 7 shows layouts 70 and 70' for describing an operation of segmenting a pattern in operation S140' of FIG. 6. The second pattern M32 of the third metal layer M3 in a layout 70 may be segmented into first to third segments M32_1 to M32_3 of the third metal layer M3 in a layout 70'.

Referring to FIG. 7, the layout 70 may include patterns extending on first to fifth tracks T21 to T25 extending in a Y-axis direction in the second metal layer M2. As illustrated in FIG. 7, the tracks of the second metal layer M2 may have a pitch P2. In some example embodiments, the patterns of the second metal layer M2 illustrated in FIG. 7 may be included in a power delivery network, and the pitch P2 may be larger than a minimum pitch of the tracks of the second metal layer M2. In this regard, patterns extending in the Y-axis direction may be added between the patterns of the second metal layer M2 illustrated in FIG. 7. In addition, the layout 70 may include the first to third patterns M31 to M33 extending in an X-axis direction in the third metal layer M3.

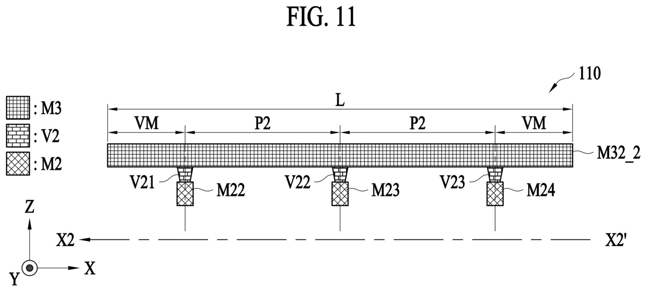

The second pattern M32 of the third metal layer M3 in the layout 70 may be electrically connected to first to fifth patterns M21 to M25 of the second metal layer M2. In operation S130 of FIG. 5, electromigration may be determined as occurring due to high current density at a portion of the second pattern M32 of the third metal layer M3, which is connected to a third pattern M23 of the second metal layer M2 through a via. In order to inhibit the electromigration to below a critical level and thereby prevent damage to the pattern due to electromigration, a semiconductor designing tool may segment the second pattern M32 of the third metal layer M3 and generate the layout 70' including the first to third segments M32_1 to M32_3. As illustrated in FIG. 7, a second segment M32_2 segmented from the second pattern M32 of the layout 70 may have a length L, and the length L may be less than or equal to a maximum length corresponding to a current estimated from a curve of the third metal layer M3. The first to third segment M32_1 to M32_3 may be electrically connected to each other and correspond to equal electric potential. An example of a cross section taken along line X2-X2' will be described below with reference to FIG. 11.

FIG. 8 is a flowchart illustrating a method for designing an integrated circuit according to an example embodiment. For example, the flowchart of FIG. 8 represents an example of operation S142 of FIG. 6. As described above with reference to FIG. 6, a segment may be generated from a first pattern in operation S142' of FIG. 8. As illustrated in FIG. 8, operation S142' may include operation S142_1 and operation S142_2. Hereinafter, FIG. 8 will be described with reference to FIGS. 5 through 7.

Referring to FIG. 8, tracks of a second wiring layer may be identified in operation S142_1. The second wiring layer may be a wiring layer adjacent to a first wiring layer in which the first pattern is disposed in operation S110 of FIG. 5. The first pattern of the first wiring layer may be connected to at least one pattern of the second wiring layer through at least one via, and the via may be disposed at a point crossing a track of the second wiring layer. Accordingly, a semiconductor designing tool may identify, by identifying the tracks of the second wiring layer, points at which vias are disposed in the first pattern.

In operation S142_2, the segment may be generated to maximally cross the tracks. As described above with reference to FIG. 6, the segment may have a length less than or equal to a maximum length corresponding to an estimated current. As described above with reference to FIG. 2B, as the number of vias connected to a pattern is increased, current paths may be increased, and an IR drop may be decreased. Accordingly, the semiconductor designing tool may determine a position of the segment at which the segment maximally crosses the tracks identified in operation S142_1. For example, the length L of the second segment M32_2 in FIG. 7 may be greater than two times the pitch P2 of the tracks of the second metal layer M2 and less than three times the pitch P2. Accordingly, the semiconductor designing tool may dispose the second segment M32_2 so that the second segment M32_2 crosses three tracks of the second metal layer M2, namely, second to fourth tracks T22 to T24 as illustrated in FIG. 7. Accordingly, the second segment M32_2 may be connected to second to fourth patterns M22 to M24 through three vias. Accordingly, the second segment M32_2 may be prevented from being connected to the patterns of the second metal layer M2 through only two vias, and the decreased IR drop may be obtained.

FIG. 9 is a flowchart illustrating a method for designing an integrated circuit according to an example embodiment. For example, the flowchart of FIG. 9 represents an example of operation S120 of FIG. 5. As described above with reference to FIG. 5, a first pattern may be disposed in a first wiring layer in operation S120' of FIG. 9. As illustrated in FIG. 9, operation S120' may include a plurality of operations S121 to S123.

Referring to FIG. 9, whether disposition of the first pattern is pre-disposition or post-disposition may be determined in operation S121. For example, as described below with reference to FIG. 16, the semiconductor designing tool may generate, by disposing cells included in the integrated circuit based on netlist data (e.g., netlist data D13 of FIG. 16) that defines the integrated circuit and performing routing for signal and/or power transmission, layout data (e.g., layout data D15 of FIG. 16) that defines a layout of the integrated circuit. The pre-disposition may refer to disposition of the first pattern, which is included in a power delivery network for transmitting power to the cells, before disposition of the cells included in the integrated circuit. The post-disposition may refer to disposition of the first pattern during the routing after the disposition of the cells. As illustrated in FIG. 9, while operation S124 may be subsequently performed in a case of disposition of the first pattern being the pre-disposition, operations S122 and S123 may be subsequently performed in a case of disposition of the first pattern being the post-disposition.

In the case of disposition of the first pattern being the pre-disposition, maximum values of a current may be collected in operation S124. For example, the power delivery network which is generated before the cells are disposed may be generated based on a maximum value of the current estimated in the integrated circuit. In some example embodiments, the maximum values of the current may be collected from the netlist data (e.g., the netlist data D13 of FIG. 16) that defines the integrated circuit. In some example embodiments, the maximum values of the current may be collected from data obtained by simulating or measuring an already manufactured integrated circuit. The semiconductor designing tool may estimate one of the collected maximum values of the current as a current flowing through the first pattern. The semiconductor designing tool may estimate a value corresponding to the first wiring layer among the collected maximum values of the current as the current flowing through the first pattern.

In the case of disposition of the first pattern being the post-disposition, a simulation result may be obtained in operation S122, and information on the current may be extracted from the simulation result in operation S123. For example, a simulation result generated by simulating the layout data that defines the integrated circuit of which the cells are disposed and for which the routing is completed may be obtained. The simulation result may include information on a current flowing through patterns, and the semiconductor designing tool may extract the information on the current flowing through the first pattern from the simulation result.

FIG. 10 is a flowchart illustrating a method for designing an integrated circuit according to an example embodiment. For example, the flowchart of FIG. 10 represents an example of operation S130 of FIG. 5. As described above with reference to FIG. 5, whether electromigration occurs (i.e., whether the electromigration exceeds a critical level) may be determined in operation S130' of FIG. 10. As illustrated in FIG. 10, operation S130' may include operation S131 and operation S132.

Referring to FIG. 10, reference data corresponding to a first wiring layer may be obtained in operation S131. For example, a semiconductor designing tool may obtain the reference data which defines a curve corresponding to the first wiring layer among curves defining a relationship between a length of a pattern and a maximum allowable current.

In operation S132, an estimated current and a maximum allowable current may be compared. For example, the semiconductor designing tool may identify, based on the reference data obtained in operation S131, the maximum allowable current which corresponds to a length of the first pattern, and compare the identified maximum allowable current and the estimated current. In some example embodiments, the semiconductor designing tool may determine the electromigration as occurring (i.e., the electromigration exceeding a critical level) when the estimated value is greater than or equal to the maximum allowable current.

FIG. 11 is a diagram illustrating a layout of an integrated circuit according to an example embodiment. For example, FIG. 11 illustrates an example of a cross section taken along line X2-X2' of the layout 70' of FIG. 7. As described above with reference to FIG. 7, the second segment M32_2 of the third metal layer M3 (which is an example for a first wiring layer in the claims) may be segmented from the second pattern M32 of the layout 70 and have the length L for preventing electromigration. For example, the second segment M32_2 may be connected, through the first to third vias V21 to V23 of the second via layer V2, to the second to fourth patterns M22 to M24 extending in a Y-axis direction in the second metal layer M2.

In some example embodiments, a segment of a first wiring layer may correspond to a sum of a multiple of a pitch between tracks of a second wiring layer adjacent to the first wiring layer and two times a via margin of a via layer between the first wiring layer and the second wiring layer. For example, as illustrated in FIG. 11, the length L of the second segment M32_2 (which is an example for the first pattern in the product claims and for the first segment in the method claims) may correspond to a sum of two times the pitch P2 between tracks of the second metal layer M2 and two times a via margin VM of the second via layer V2 (that is, L=2*P2+2*VM). Due to a semiconductor process, a pattern connected to a via may be required to have a length of a via margin from a center of a via. Accordingly, the second segment M32_2 may have a length corresponding to a sum of a length between a first via V21 and a third via V23 of the second via layer V2, namely, two times the pitch P2 and two times the via margin VM.

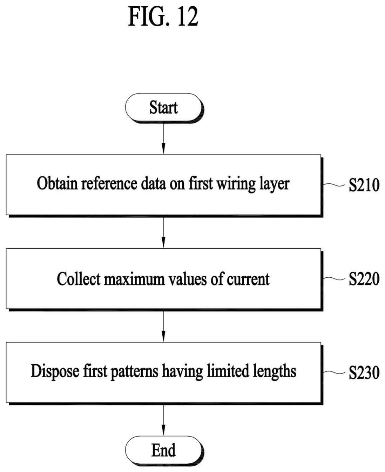

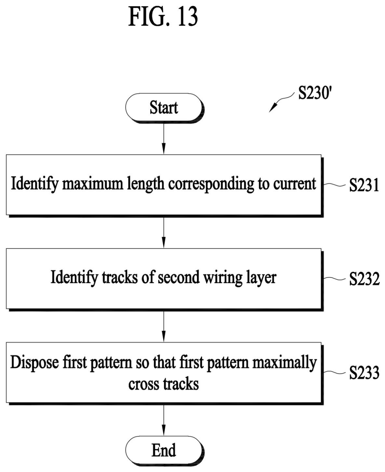

FIG. 12 is a flowchart illustrating a method for designing an integrated circuit according to an example embodiment. In some example embodiments, as described below with reference to FIG. 16, the method of FIG. 12 may be included in an operation of generating layout data that defines a layout of the integrated circuit. Unlike a method of FIG. 5 which generates at least one segment by segmenting a disposed pattern, the method of FIG.12 may dispose a pattern having a limited length when occurrence of electromigration (i.e., electromigration exceeding a critical level) is expected. In some example embodiments, a first pattern disposed in FIG. 13 may correspond to a segment generated in FIG. 5. As illustrated in FIG. 12, the method for designing the integrated circuit may include a plurality of operations S210 to S230. In some example embodiments, the method of FIG. 12 may be performed by a semiconductor designing tool executed on a computing system (e.g., the computing system 180 of FIG. 18). Hereinafter, redundant details of a description for FIG. 12, which are similar to the above description with reference to the drawings, will be omitted.

Referring to FIG. 12, reference data on a first wiring layer may be obtained in operation S210. As described above with reference to FIG. 4, a curve that shows a relationship between a length of a pattern and a maximum allowable current may be defined, and the reference data may include information on a curve corresponding to the first wiring layer. The semiconductor designing tool may identify a relationship between a length of a pattern in the first wiring layer and a maximum allowable current from the obtained reference data.

Maximum values of a current may be collected in operation S220. For example, as described above with reference to FIG. 9, before placing cells, a power delivery network may be generated based on a maximum value of a current estimated in the integrated circuit. The maximum values may be collected in various ways. The semiconductor designing tool may estimate one of the collected maximum values as a current flowing through a pattern of the first wiring layer.

In operation S230, first patterns having limited lengths may be disposed. For example, based on the reference data obtained in operation S210 and the current estimated from the maximum values collected in operation S220, the semiconductor designing tool may identify a first maximum length for patterns of the first wiring layer and dispose the first patterns which have lengths less than or equal to the first maximum length. Accordingly, the occurrence of damage due to the electromigration may be prevented in the first patterns of the first wiring layer. An example of operation S230 will be described below with reference to FIG. 13.

FIG. 13 is a flowchart illustrating a method for designing an integrated circuit according to an example embodiment. For example, the flowchart of FIG. 13 represents an example of operation S230 of FIG. 12. As described above with reference to FIG. 12, first patterns having limited lengths may be disposed in operation S230' of FIG. 13. As illustrated in FIG. 13, operation S230' may include a plurality of operations S231 to S233. Hereinafter, FIG. 13 will be described with reference to FIG. 12.

Referring to FIG. 13, a maximum length corresponding to a current may be identified in operation S231. For example, a semiconductor designing tool may identify, based on reference data, a maximum length of a pattern of a first wiring layer corresponding to a current estimated from maximum values collected in operation S220 of FIG. 12. As described above with reference to FIG. 4, a length of a pattern corresponding to a maximum allowable current within a range within which a short length effect occurs may be obtained, and electromigration (i.e., the electromigration exceeding a critical level) may occur in a pattern having a length exceeding the obtained length.

In operation S232, tracks of a second wiring layer may be identified. The second wiring layer may be adjacent to the first wiring layer. The semiconductor designing tool may identify a position of a via between the pattern of the first wiring layer and a pattern of the second wiring layer by identifying the tracks of the second wiring layer.

In operation S233, a first pattern may be disposed to maximally cross the tracks. For example, the semiconductor designing tool may identify a length and a position of the first pattern so that the first pattern maximally crosses the tracks identified in operation S232. In some example embodiments, the semiconductor designing tool may determine the length of the first pattern, which is larger than a multiple of a pitch between the tracks of the second wiring layer and smaller than the maximum length identified in operation S231, and dispose the first pattern so that the first pattern maximally crosses the tracks. Accordingly, while the electromigration may be prevented in the first pattern, a decreased IR drop may be obtained.

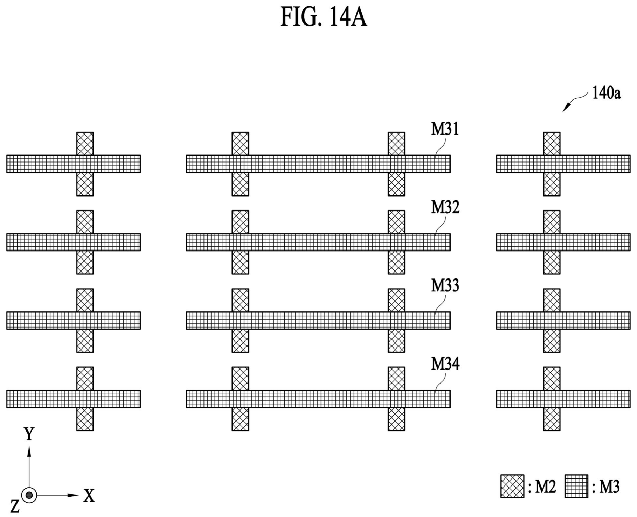

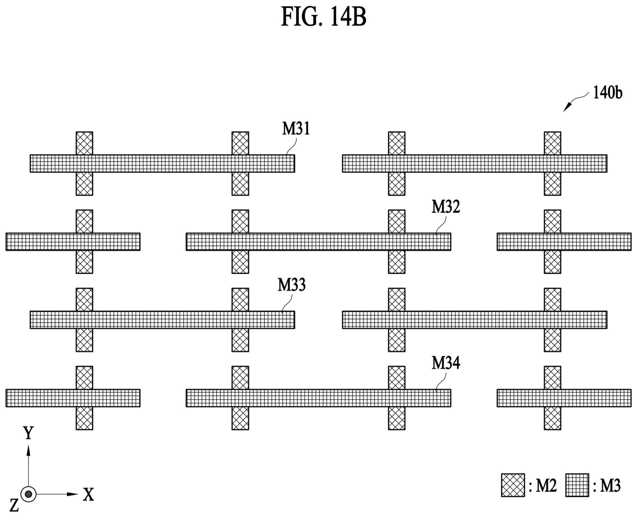

FIGS. 14A and 14B are diagrams illustrating examples of a layout of an integrated circuit according to example embodiments. For example, FIGS. 14A and 14B illustrate layouts 140a and 140b in which patterns having limited lengths are differently disposed. As described above with reference to the drawings, the patterns having the limited lengths may extend in an X-axis direction in order to prevent the electromigration in the third metal layer M3.

In some example embodiments, the patterns may be aligned in a Y-axis direction. For example, as illustrated in FIG. 14A, in a layout 140a, first to fourth patterns M31 to M34 of the third metal layer M3 may extend in parallel with each other in the X-axis direction and aligned in the Y-axis direction. In some example embodiments, the patterns may not be aligned in the Y-axis direction. For example, as illustrated in FIG. 14B, in a layout 140b, the first pattern M31 and the second pattern M32 which are adjacent to each other may not be aligned in the Y-axis direction. Similarly, each of second to fourth patterns M32 to M34 may not be aligned with an adjacent pattern in the Y-axis direction.

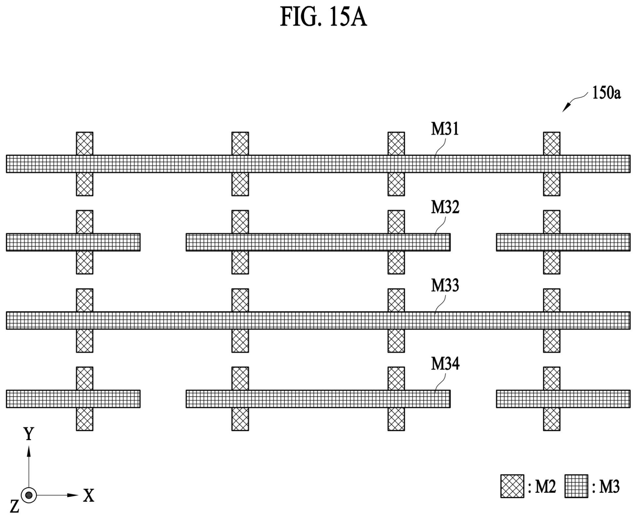

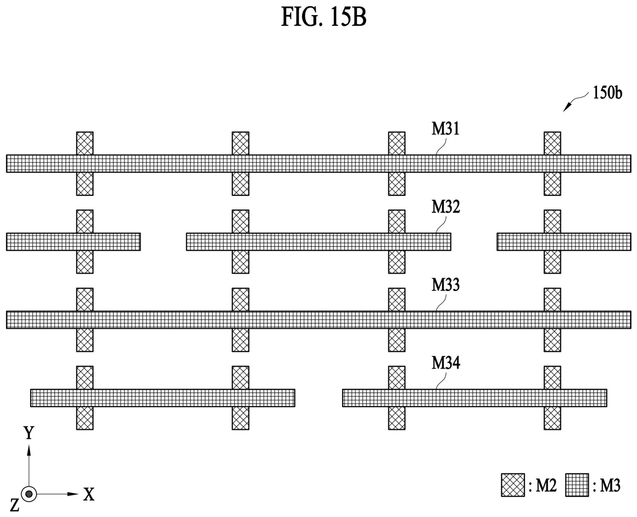

FIGS. 15A and 15B are diagrams illustrating examples of a layout of an integrated circuit according to example embodiments. For example, FIGS. 15A and 15B illustrate layouts 150a and 150b in which patterns having limited lengths are differently disposed. In some example embodiments, only patterns that transmit a predetermined supply voltage in a power delivery network of the integrated circuit may have the limited lengths. For example, the integrated circuit may use one negative supply voltage (or ground electric potential) and a plurality of positive supply voltages. While a current provided from devices to which the plurality of positive supply voltages is applied may pass through a pattern transmitting the negative supply voltage, a relatively small current may pass through patterns individually transmitting the plurality of positive supply voltages. Accordingly, electromigration may exceed a critical level only in the pattern transmitting the negative supply voltage because of high current density, and only patterns transmitting the negative supply voltage in the integrated circuit may have the limited lengths.

Referring to FIG. 15A, the first to fourth patterns M31 to M34 of the third metal layer M3 may extend in parallel with each other in an X-axis direction in a layout 150a. In some example embodiments, while the first pattern M31 and the third pattern M33 may transmit positive supply voltages, the second pattern M32 and a fourth pattern M34 may transmit negative supply voltages and have the limited lengths in order to prevent the electromigration as described above with reference to drawings. Similarly to the layout 140a of FIG. 14A, the second pattern M32 and the fourth pattern M34 having the limited lengths may be aligned in a Y-axis direction.

Referring to FIG. 15B, the first to fourth patterns M31 to M34 of the third metal layer M3 may extend in parallel with each other in the X-axis direction in a layout 150b. While the first pattern M31 and the third pattern M33 may transmit the positive supply voltages, the second pattern M32 and the fourth pattern M34 may transmit the negative supply voltages and have the limited lengths in order to prevent the electromigration as described above with reference to the drawings. Similarly to the layout 140b of FIG. 14B, the second pattern M32 and the fourth pattern M34 having the limited lengths may not be aligned in the Y-axis direction.

FIG. 16 is a flowchart illustrating a method for manufacturing an integrated circuit IC according to an example embodiment. Specifically, the flowchart of FIG. 16 illustrates an example of the method for manufacturing the integrated circuit IC which includes cells. As illustrated in FIG. 16, the method for manufacturing the integrated circuit (IC) may include a plurality of operations S10, S30, S50, S70, and S90.

A cell library (or standard cell library) D12 may include information on the cells, such as functions, characteristics, layouts, or the like. A designing rule D14 may include requirements that a layout of the integrated circuit (IC) may observe. For example, the cell library D14 may include requirements for a space between patterns in an identical layer, minimum widths of the patterns, a routing direction of a wiring layer, tracks of the wiring layer, or the like.

A logic synthesis generating the netlist data D13 from register-transfer-level (RTL) data D11 may be performed in operation S10. For example, a semiconductor designing tool (e.g., a logic synthesis tool) may generate, by performing logic synthesis with reference to the cell library D12 from the RTL data D11 which is prepared as a hardware description language (HDL) such as very high speed integrated circuit (VHSIC) hardware description language (VHDL) and Verilog, the netlist data D13 which includes a bitstream and a netlist. The netlist data D13 may indicate an input on placement and routing that will be described below. Herein, the netlist data D13 may be referred to as input data.

The cells may be placed in operation S30. For example, the semiconductor designing tool (e.g., a placement and routing (P&R) tool) may place, with reference to the cell library D12 and the designing rule D14, the cells which is used in the netlist data D13. In some example embodiments, the semiconductor designing tool may dispose a power gating cell and may place backside patterns in a backside wiring layer.

Pins of the cells may be routed in operation S50. For example, the semiconductor designing tool may generate interconnections electrically connecting output pins and input pins of disposed function cells. Also, the semiconductor designing tool may generate interconnections connected to a node to which a positive supply voltage is applied or a node to which a negative supply voltage is applied in order to provide power to the cells. An interconnection may include a via of a via layer and/or a pattern of a wiring layer. The semiconductor designing tool may generate the layout data D15 which defines the placed cells and the generated interconnections. The layout data D15, for example, may have a format such as GDSII and include geometric information on the cells and the interconnections. The designing rule D14 may be referenced for the semiconductor designing tool during routing of the pins of the cells. The layout data D15 may indicate disposition and an output of the routing. Operation S50 solely or operations S30 and S50 collectively may referred to as the method of designing the integrated circuit. In some example embodiments, the above-described methods of FIGS. 5 and 12 may be included in an operation including operations S30 and S50.

In operation S70, an operation of fabricating a mask may be performed. For example, optical proximity correction (OPC) for correcting distortion such as refraction due to a characteristic of light in photolithography may be applied to the layout data D15. Patterns on the mask may be defined in order to form patterns disposed in a plurality of layers based on data to which the OPC is applied, and at least one mask (or photomask) for forming the respective patterns of the plurality of layers may be fabricated. In some example embodiments, the layout of the integrated circuit IC may be limitedly changed in shape in operation S70. Limitedly changing the integrated circuit IC in shape in operation S70 may be referred to as design polishing as post-processing for optimizing a structure of the integrated circuit IC.

An operation of manufacturing the integrated circuit (IC) may be performed in operation S70. For example, the plurality of layers may be patterned by using the at least one mask fabricated in operation S70, and using the fabricated mask, the integrated circuit IC may be manufactured. Front-end-of-line (FEOL) may include, for example, an operation of planarization and cleansing of a wafer, an operation of forming a trench, an operation of forming a well, an operation of forming a gate electrode, and an operation of forming a source and a drain. An individual device, for example, a transistor, a capacitor, a resistor, or the like may be formed on a substrate by the FEOL. In addition, back-end-of-line (BEOL) may include, for example, an operation of performing silicidation of a source and drain area, an operation of adding a dielectric, an operation of planarization, an operation of forming a hole, an operation of adding a metal layer, an operation of forming the via, an operation of forming a passivation layer, or the like. The individual device, for example, the transistor, the capacitor, the resistor, and the like may be connected to each other by the BEOL. In example embodiments, middle-of-line (MOL) may be performed between the FEOL and the BEOL, and contacts may be formed on individual devices. Then, the integrated circuit IC may be packaged in a semiconductor package and used as components of various applications.

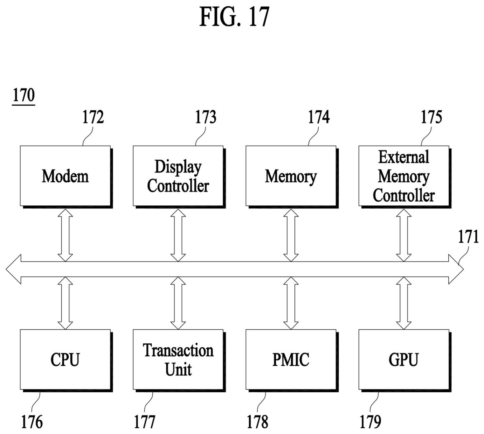

FIG. 17 is a block diagram illustrating a system-on-chip (SoC) 170 according to an example embodiment. The system-on-chip 170 may be a semiconductor device and may include an integrated circuit according to an example embodiment. The system-on-chip 170 may be one chip in which complicated blocks such as an intellectual property (IP) block for performing various functions are implemented. For example, an IP block may include circuitry to perform specific functions, and may have a design that includes a trade secret. The system-on-chip 170 may be designed in a method of designing the integrated circuit according to example embodiments, and accordingly, the system-on-chip 170 may have an improved lifetime, improved reliability, improved performance, and improved efficiency. Referring to FIG. 17, the system-on-chip 170 may include a modem 172, a display controller 173, a memory 174, an external memory controller 175, a central processing unit (CPU) 176, a transaction unit 177, a power management integrated circuit (PMIC) 178, and a graphic processing unit (GPU) 179. Function blocks of the system-on-chip 170 may communicate with each other through a system bus 171.

The CPU 176 for controlling an operation of the system-on-chip 170 in an uppermost hierarchy may control operations of other function blocks 172 to 179. The modem 172 may demodulate a signal received from an outside of the system-on-chip 170 or may modulate a signal generated in the system-on-chip 170 and transmit the signal to the outside. The external memory controller 175 may control an operation of transmitting and receiving data to and from an external memory device connected to the system-on-chip 170. For example, a program and data stored in the external memory device may be provided to the CPU 176 or the GPU 179 under control by the external memory controller 175. The GPU 179 may execute program instructions associated with graphic processing. The GPU 179 may receive graphic data through the external memory controller 175 and transmit graphic data processed by the GPU 179 to the outside of the system-on-chip 170 through the external memory controller 175. The transaction unit 177 may monitor data transaction of each of the function blocks. The PMIC 178 may control power supplied to each of the function blocks according to control by the transaction unit 177. The display controller 173 may transmit the data generated in the system-on-chip 170 by controlling a display (or display device) outside the system-on-chip 170. The memory 174 may include a non-volatile memory such as an electrically erasable programmable read-only memory (EEPROM) or a flash memory or may include a volatile memory such as a dynamic random access memory (DRAM) or a static random access memory (SRAM).

FIG. 18 is a block diagram illustrating the computing system 180 including a memory that stores a program according to an example embodiment. A method of designing an integrated circuit according to example embodiments, for example, at least a portion of operations of the above-described flowchart may be performed on the computing system (or computer) 180.

The computing system 180 may be a stationary computing system such as a desktop computer, a workstation, or a sever or may be a portable computing system such a laptop computer. As illustrated in FIG. 18, the computing system 180 may include a processor 181, input/output devices 182, a network interface 183, a random access memory (RAM) 184, a read only memory (ROM) 185, and a storage 186. The processor 181, the input/output devices 182, the network interface 183, the RAM 184, the ROM 185, and the storage 186 may be connected to a bus 187 and communicate with each other through the bus 187.

The processor 181 may be referred to as a processing unit and include at least one core for executing an instruction set (e.g., Intel Architecture-32 (IA-32), a 64-bit extension of IA-32, x86-64, Performance Optimization With Enhanced RISC - Performance Computing (PowerPC), Scalable Processor ARChitecture (SPARC), Microprocessor without Interlocked Pipelined Stages (MIPS), Advanced RISC Machines (ARM), IA-64, or the like), such as a micro-processor, an application processor (AP), a digital signal processor (DSP), or a graphic processing unit (GPU). For example, through the bus 187, the processor 181 may access a memory, namely, the RAM 184 or the ROM 185 and execute instructions stored in the RAM 184 or the ROM 185.

The RAM 184 may store a program PGM for the method of designing the integrated circuit according to an example embodiment or at least a portion thereof. The program PGM may allow the processor 181 to perform the method of designing the integrated circuit, for example, at least a portion of operations included in the methods described above with reference to the drawings. That is, the program PGM may include a plurality of instructions executable by the processor 181, and the plurality of instructions included in the program PGM may allow the processor 181 to perform, for example, the at least a portion of the operations of the above-described flowchart.

The storage 186 may not lose stored data although power provided to the computing system 180 is shut down. For example, the storage 186 may include a non-volatile memory device or may include a storage medium such as a magnetic tape, an optical tape, or a magnetic disk. Also, the storage 186 may be detached from the computing system 180. The storage 186 may store the program PGM according to an example embodiment. The program PGM or the at least a portion thereof may be loaded into the RAM 184 before the program PGM is executed by the processor 181. Alternatively, the storage 186 may store a file prepared in a program language. The program PGM which is generated from the file by a complier or the like or the at least a portion thereof may be loaded into the RAM 184. In addition, as illustrated in FIG. 18, the storage 186 may store a database DB. The database DB may include information required for designing the integrated circuit, for example, reference data, the cell library D12, and/or the cell rule D14 of FIG. 16.

The storage 186 may store data to be processed by the processor 181 or data processed by the processor 181. That is, according to the program PGM, the processor 181 may generate data by processing the data stored in the storage 186 and store the generated data into the storage 186. For example, the storage 186 may store the RTL data D11,the netlist data D13, and/or the layout data D15.

The input/output devices 182 may include an input device such a keyboard or a pointing device and include an output device such as a display device or a printer. For example, through the input/output devices 182, a user may trigger execution of the program PGM by the processor 181, input the RTL data D11 and/or the netlist data D13 of FIG. 16, or identify the layout data D15 of FIG. 16.

The network interface 183 may provide access to a network outside the computing system 180. For example, the network may include multiple computing systems and communication links, and the communication links may include wired links, optical links, wireless links, or other various links.

While aspects of example embodiments have been particularly shown and described, it will be understood that various changes in form and details may be made therein without departing from the scope of the following claims.

## Claims

1. An integrated circuit comprising:
a first pattern (M32_2; M32) extending along a first direction (X) in a first wiring layer (M3);
a second pattern (M22) and a third pattern (M23) extending in parallel with each other along a second direction (Y) in a second wiring layer (M2);
a first via (V21) between the first pattern (M32_2; M32) and the second pattern (M22);
a second via (V22) between the first pattern (M32_2; M32) and the third pattern (M23); and
a fourth pattern (M32_1) and a fifth pattern (M32_3) aligned to the first pattern (M32_2; M32) and extending along the first direction (X) in the first wiring layer (M3),
wherein the first pattern (M32_2; M32) is between the fourth pattern (M32_1) and the fifth pattern (M32_3), and
wherein the first pattern (M32_2; M32), the fourth pattern (M32_1) and the fifth pattern (M32_3) are electrically connected to each other.

2. The integrated circuit of claim 1, further comprising:
a sixth pattern (M21) and a seventh pattern (M25) extending along the second direction (Y) in parallel with the second pattern (M22) and the third pattern (M23) in the second wiring layer (M2);
a third via between the fourth pattern (M32_1) and the sixth pattern (M21); and
a fourth via between the fifth pattern (M32_3) and the seventh pattern (M25).

3. The integrated circuit of claim 1 or 2, wherein a length (L) of the first pattern (M32_2; M32) in the first direction (X) corresponds to a sum of a pitch (P2) between the first via (V21) and the second via (V22), a first via margin (VM) of the first via (V21), and a second via margin (VM) of the second via (V22).

4. The integrated circuit of any one of claims 1 to 3, wherein the first pattern (M32_2; M32) has, along the first direction (X), a length (L) less than or equal to a first maximum length at which an electromigration short length effect occurs in the first wiring layer (M3).

5. The integrated circuit of claim 1, further comprising:
a sixth pattern (M21) extending along the second direction (Y) in parallel with the second pattern (M22) and the third pattern (M23) in the second wiring layer (M2); and
a third via between the first pattern (M32_2; M32) and the sixth pattern (M21).

6. The integrated circuit of any one of claims 1 to 5, further comprising:
a eighth pattern (M34) extending along the first direction (X) in parallel with the first pattern (M32) in the first wiring layer (M3); and
a ninth pattern (M33) extending along the first direction (X) between the first pattern (M32) and the eighth pattern (M34),
wherein the first pattern (M32) is between the eighth pattern (M31) and the ninth pattern (M33) in the first wiring layer (M3),
wherein the eighth pattern (M34) has a length equal to that of the first pattern (M32) along the first direction (X).

7. The integrated circuit of claim 6, wherein the eighth pattern(M34) is aligned to the first pattern (M32) along the second direction (Y), and
wherein the ninth pattern (M33) has a length equal to that of the first pattern (M32) along the first direction (X) and is aligned to the first pattern (M32) along the second direction (Y).

8. The integrated circuit of claim 6, wherein the eighth pattern (M34) is aligned to the first pattern (M32) along the second direction (Y), and
wherein the ninth pattern (M33) has a length equal to that of the first pattern (M32) along the first direction (X) and is offset from the first pattern (M32) along the second direction (Y).

9. The integrated circuit of claim 6, wherein the ninth pattern (M33) has a length longer than those of the first pattern (M32) and the eighth pattern (M34) along the first direction (X).

10. A method for designing an integrated circuit, the method comprising:
disposing (S110) a first pattern (M32) extending along a first direction (X) in a first wiring layer (M3);
estimating (S120) a current flowing through the first pattern (M32);
determining (S130) whether electromigration exceeds a critical value based on the first pattern (M32) and the current; and
segmenting (S140) the first pattern (M32) based on determining the electromigration exceeds the critical value,
wherein the segmenting (S140) of the first pattern (M32) comprises:
identifying (S141) a first maximum length at which an electromigration short length effect occurs in the first wiring layer (M3); and
generating (S142), from the first pattern (M32), a first segment (M32_2) having a length less than or equal to the first maximum length.

11. The method of claim 10, wherein the estimating of the current comprises:
obtaining a simulation result based on data indicating the integrated circuit; and
estimating information on the current from the simulation result.

12. The method of claim 10, wherein the estimating of the current comprises collecting maximum values of the current.

13. The method of any one of claims 10 to 12, wherein the determining of whether the electromigration exceeds the critical value comprises:
obtaining reference data corresponding to the first wiring layer (M3); and
determining whether the current exceeds a maximum allowable current based on the reference data.

14. The method of claim 13, wherein the identifying of the first maximum length comprises identifying the first maximum length which corresponds to the current based on the reference data.

15. The method of any one of claims 10 to 14, wherein the generating of the first segment (M32_2) comprises:
identifying tracks of second patterns extending along a second direction (Y) in a second wiring layer (M2); and
generating the first segment (M32_2) so that the first segment crosses a maximum number of the tracks.
